# EUROPÄISCHE PATENTSCHRIFT

(11) **EP 0 550 818 B1**
(45) Veröffentlichungstag und Bekanntmachung des Hinweises auf die Patenterteilung: **18.03.1998**
(21) Anmeldenummer: 92119585.5
(22) Anmeldetag: 17.11.1992
(51) Int. Cl.: A46B 7/04, A46B 7/06

(54) **Griff mit einem Halteorgan und Interdentalbürste zum auswechselbaren Befestigen an solchen Halteorgan**
Handle with fixing means and interdental brush for removable fitting to said fixing means
Manche avec moyen de fixation et brosse interdentale s'y attachant de façon amovible

(30) Priorität: 09.01.1992 CH 49/92
(43) Veröffentlichungstag der Anmeldung: 14.07.1993
(73) Patentinhaber: Breitschmid AG, CH-6010 Kriens (CH)
(72) Erfinder: Breitschmid, Ueli, CH-6045 Meggen (CH)
(74) Vertreter: Roshardt, Werner Alfred, Dipl.-Phys.

(56) Entgegenhaltungen:
- WO-A-86/02532
- DE-A- 3 832 694
- FR-A- 912 722
- US-A- 4 534 081
- US-A- 4 543 679
- US-A- 4 679 272

## Beschreibung

### Technisches Gebiet

Die Erfindung bezieht sich auf einen Griff mit einem Halteorgan gemäss Oberbegriff des Anspruchs 1. Weiter bezieht sich die Erfindung auf ein Zahnreinigungsset mit einem solchen Griff und einer Interdentalbürste.

### Stand der Technik

Aus der EP-A-001 044 ist ein Zahnreinigungsgerät bekannt, bei welchem eine Interdentalbürste auswechselbar an einem Griff befestigbar ist. Die Interdentalbürste hat einen zylindrischen Klemmstopfen, der mit Klemmsitz in ein Sackloch des Griffs einsetzbar ist. Verklemmt sich nun aber die Interdentalbürste in einem Zahnzwischenraum und wird infolgedessen versucht, durch starken Zug am Griff die Interdentalbürste aus dem Zahnzwischenraum herauszuziehen, so löst sich der Klemmstopfen aus dem Klemmsitz. Man muss folglich mit der Hand in den Mund hineingreifen und den Formteil fassen, was wegen dessen Kleinheit mühsam ist.

Aus der WO-86/025 32 ist nun eine Dentalbürste der eingangs genannten Art bekannt, die dieses Problem vermeidet. Sie ist an einem Ende eines Griffs auswechselbar gehalten. Das Griffende hat ein Bolzengewinde, auf dem eine Gewindehülse sitzt, ein quer durch das Bolzengewinde hindurch verlaufendes Durchgangsloch und eine Längsnut. Der Borstenträger der Bürste sitzt in einer zylindrischen Fassung aus Kunststoff, an deren freien Ende eine einen Anschlag bildende Traverse angeformt ist. Die Bürste wird mit den Borsten voran durch das Durchgangsloch gesteckt. Die Traverse wird in die Nut eingebracht und die Gewindehülse auf dem Bolzengewinde über die Traverse geschraubt, sodass letztere zwischen der Hülse und dem Boden der Nut festgeklemmt wird.

Diese Art der Fixierung ist zwar sehr stabil und vermeidet das Abbrechen des Borstenträgers an seinem Ansatz, erfordert aber bei jedem Auswechseln der Dentalbürste ein Zurück- und Yorschrauben der Gewindehülse.

Aus der US 4,543,679 ist eine Zahnbürste bekannt, bei welcher ein Borstenteil lösbar in einem Kopf des Zahnbürstengriffs befestigbar ist. Die auswechselbare Bürste hat einen axialen Stopfen, welcher in eine Bohrung im Kopf einführbar ist. Der Stopfen weist kleine Verbreiterungen auf, die hinter einer Verjüngung in der Bohrung des Kopfs einrasten können. Am anderen Ende des Griffs ist Z. B. ein Stimulator oder ein Zahnreinigungsschwamm befestigbar. Der Zahnreinigungsschwamm enthält ein flüssiges Reinigungsmittel, das beim Zusammendrücken abgegeben wird.

### Darstellung der Erfindung

Aufgabe der Erfindung ist es nun, einen Griff mit einem Halteorgan der eingangs genannten Art zu schaffen, an welchem eine Interdentalbürste einfach, schnell und zuverlässig befestigbar ist.

Die erfindungsgemässe Lösung ist durch die Merkmale des Anspruchs 1 definiert. Demzufolge ist die Ausnehmung so ausgebildet, dass die Interdentalbürste in Richtung ihrer Längsachse mit dem Querelement voran in die Ausnehmung einführbar und durch Umklappen in ihr einrastbar ist.

Zum Befestigen der Bürste genügt somit im Prinzip ein Handgriff. Das am Befestigungsteil der Bürste ausgebildete Querelement gewährleistet eine hohe Zugbelastbarkeit der Verbindung. Anders als beim Stand der Technik wird bei der Erfindung das Querelement in die Ausnehmung eingeführt und kann in ihr einrasten.

Gemäss einer besonders bevorzugten Ausführungsform ist die Ausnehmung so ausgebildet, dass nach dem axialen Einführen des Befestigungsteils das Einrasten durch Umklappen der Interdentalbürste um eine Achse, die zur Längsachse senkrecht steht, herbeiführbar ist. Beim Querelement handelt es sich in diesem Fall vorzugsweise um eine in geringem Abstand zum hinteren Ende des Befestigungsteils vorgesehene Traverse. Um diese wird die Interdentalbürste zwecks Erzielung der Einrastung umgeklappt.

Mit Vorteil weist die Ausnehmung einen schlitzförmigen Bereich zur Aufnahme eines Längselements des Befestigungsteils auf, der durch einen zangenförmigen Organteil gebildet ist. Durch Umklappen wird der Längsteil in den zangenförmigen Organteil eingeführt. Das Querelement verhindert, dass die befestigte Interdentalbürste zwischen dem zangenförmigen Organteil in axialer Richtung hindurchgezogen werden kann. Zum Auswechseln muss die Bürste in jedem Fall zunächst zurückgeklappt werden. Der zangenförmige Organteil ist so ausgebildet, dass der Längsteil in der Befestigungsstellung einrastet. Denkbar ist auch ein allein durch das Querlement erzieltes Einrasten.

Ist das Querelement eine Traverse, so umfasst die Ausnehmung typischerweise eine T-förmige Schlitzung mit Längs- und Querschlitz. Der Befestigungsteil wird zunächst mit der Traverse voraus in den Querschlitz eingeführt und dann umgeklappt, sodass das Längselement in den Längsschlitz zu liegen kommt. Die T- oder kreuzförmige Schlitzung kann auch so ausgebildet sein, dass ein Umklappen der Interdentalbürste nicht erforderlich ist, sondern dass der Befestigungsteil senkrecht zu seiner Längsachse eingeschoben wird.

Gemäss einer bevorzugten Ausführungsform ist an einer Seite des Querschlitzes, gegenüberliegend zum Längsschlitz, ein die Schlitzöffnung untergreifender Hohlraum ausgebildet. In diesen Hohlraum kommt das hintere Ende des Befestigungsteils zu liegen. Dadurch wird verhindert, dass das Längselement senkrecht zu seiner Achse aus der Ausnehmung herausgeschoben werden kann.

Gemäss einer besonders bevorzugten Ausführungsform ist die Ausnehmung zugleich zum kraftschlüssigen Befestigen einer steckbaren Interdentalbürste ausgebildet. Es kann z.B. der oben erwähnte Hohlraum als Loch ausgeführt sein, in welchem die genannte steckbare Interdentalbürste kraftschlüssig fixierbar ist.

Die Erfindung zeichnet sich dadurch aus, dass keine beweglichen Teile zur Herstellung der Verbindung benötigt werden. Das Halteorgan als solches ist somit vorzugsweise einteilig. Griff und Halteorgan können z.B. als Kunststoffspritzgussteil ausgeführt sein. Ein langlebiges, hochwertiges Zahnreinigungsgerät wird demgegenüber vorzugsweise aus Metall hergestellt. Dabei lässt sich die erfindungsgemässe Ausbildung des Halteorgans mit einfachen Mitteln herstellen (bohren, fräsen).

Am erfindungsgemässen Halteorgan können an sich bekannte Dentalbürsten, aber auch neuartige, befestigt werden. Ganz allgemein haben die bei der vorliegenden Erfindung einsetzbaren Dentalbürsten einen borstentragenden vorderen Abschnitt und ein mit einem Befestigungsmittel versehenes hinteres Ende. Das Befestigungsmittel ist typischerweise ein Formteil.

Eine besondere, im Rahmen der Erfindung liegende Dentalbürste zeichnet sich nun dadurch aus, dass das Befestigungsmittel so ausgebildet ist, dass es den einen Teil eines druckknopfartigen Verschlusses bildet. Die Verbindung wird somit durch axiales Einrasten geschaffen.

Um eine elastische Beweglichkeit resp. eine flexible Führung des borstentragenden Abschnitts zu gewährleisten, kann der als Befestigungsmittel ausgebildete Teil eine federnde, an der Halterung abzustützende Ringschulter aufweisen.

Mit Vorteil ist der als Befestigungsmittel ausgebildete Teil der hintere Abschnitt eines Uebergangsstücks, welches hinter dem borstentragenden vorderen Abschnitt der Dentalbürste angeordnet ist.

Vorzugsweise weist der als Befestigungsmittel ausgebildete Teil eine Ausnehmung mit verengter Oeffnung auf. An einer Halterung zur auswechselbaren Befestigung der Dentalbürste ist der entsprechende andere Teil des druckknopfartigen Verschlusses vorgesehen. Vorzugsweise ist der an der Halterung ausgebildete andere Teil als vorstehendes Element mit einer Einschnürung ausgebildet.

Im Prinzip könnten die Verhältnisse auch umgekehrt sein, wobei das vorspringende Element an der Dentalbürste vorgesehen ist.

Da das vorspringende Element stark beansprucht ist, besteht es vorzugsweise aus einem harten robusten Material, wie z.B. Kunststoff oder vorzugsweise Metall. Angesichts der Tatsache, dass die Dentalbürste für den Einmalgebrauch bestimmt ist, ist es vorteilhaft, wenn sie möglichst billig und ohne metallische Formteile hergestellt werden kann. Das Uebergangsstück ist vorzugsweise aus einem weichelastischen Material.

Der am hinteren Ende der Dentalbürste ausgebildete Teil des druckknopfartigen Verschlusses kann aber durchaus auch aus einem inelastischen Kunststoff (oder einem anderen harten Material) bestehen. Um bei derartigen Verschlussteilen die Schnappwirkung zu verbessern, kann das vorspringende Element entlang seiner Längsachse einfach oder kreuzweise gespalten sein. Die dadurch gebildeten "Einzelteile" des vorspringenden Elements sind infolgedessen quer zur Längsachse in minimalem, aber ausreichendem Mass elastisch gelagert. Beim Zusammenfügen der beiden entsprechenden Teile des Verschlusses werden sie leicht zusammengepresst und federn beim Einrasten (in radialer Richtung) nach aussen zurück.

Gemäss einer besonders bevorzugten Ausführungsform ist die Ausnehmung zumindest näherungsweise sphärisch ausgebildet, so dass eine kugelgelenkartige Beweglichkeit des Verschlusses ermöglicht wird. Die federnde Ringschulter erzeugt bei Abstützung an der Halterung eine den vorderen Abschnitt ausrichtende Kraft. In der Regel werden bei erfindungsgemässen Dentalbürsten die Borsten zwischen verdrillten Drähten festgehalten. Der auf diese Weise gebildete Borstenträger ist verhältnismässig steif. Von daher ist es vorteilhaft, wenn zwischen dem Griff und dem Borstenträger ein kugelgelenkartig beweglicher Uebergang besteht.

Mit Vorteil ist das Uebergangsstück in der Art eines Stimulators ausgebildet. Zu diesem Zweck ist es gegen den borstentragenden Abschnitt hin konisch zusammenlaufend geformt. Das Uebergangsstück kann im wesentlichen kegelförmig ausgebildet sein, wobei die Spitze des Kegels dem borstentragenden Abschnitt zugewandt und die Ausnehmung in der Basis mit verengter Oeffnung eingeformt ist.

Eine besonders gute Stimulationswirkung ergibt sich, wenn am konischen resp. kegelförmigen Uebergangsstück axiale Längsrippen aus einem weichelastischen Material vorgesehen sind.

Gemäss der Erfindung kann für einen Griff ein ganzes Set von unterschiedlichen Dentalbürsten vorgesehen sein. Alle haben zwar denselben druckknopfartigen Verschluss am hinteren Ende, unterscheiden sich aber z.B. in der Länge der Borsten oder der Art des Uebergangsstücks. (Ein Set kann in diesem Sinn unterschiedliche Dentalbürsten mit Stimulatoren und/oder von unterschiedlicher Farbe umfassen.)

Aus der Gesamtheit der Patentansprüche und der nachfolgenden Beschreibung ergeben sich weitere bevorzugte Ausführungsformen der Erfindung.

### Kurze Beschreibungen der Zeichnungen

Nachfolgend soll die Erfindung anhand von Ausführungsbeispielen und im Zusammenhang mit den Zeichnungen näher erläutert werden. Es zeigen:
- Fig. 1: Eine Dentalbürste mit einem sphärischen, kugelgelenkartigen Befestigungsteil;
- Fig. 2: Eine Dentalbürste mit einer konkavkonischen Oberfläche;
- Fig. 3: Ein geschlitztes, vorspringendes Element im Querschnitt:
- Fig. 4: ein Griff mit an diesem befestigter Interdentalbürste;
- Fig. 5a-d: eine schematische Darstellung eines Halteorgans in der Draufsicht (Fig. 5a) und in drei Seitenansichten (Fig. 5b-d);
- Fig. 6: eine Interdentalbürste mit Traverse;
- Fig. 7: eine steckbare Interdentalbürste;
- Fig. 8a,b: eine schematische Darstellung der beiden Schritte zur Befestigung einer Interdentalbürste durch Umklappen;
- Fig. 9: eine Darstellung einer im Halteorgan durch Kraftschluss gehaltenen Interdentalbürste;
- Fig. 10: eine im Halteorgan im Sinn einer druckknopfartigen Befestigung gehaltene Interdentalbürste.

Grundsätzlich sind in allen Figuren entsprechende Teile mit gleichen Bezugszeichen versehen.

### Wege zur Ausführung der Erfindung

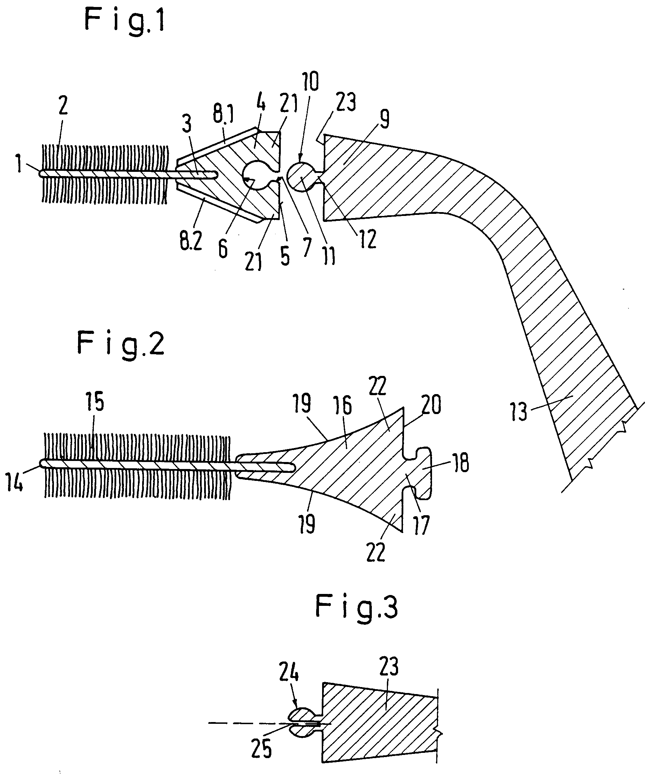

Fig. 1 zeigt im Schnitt eine Dentalbürste und einen Griff mit entsprechender Halterung für die Dentalbürste. Die Dentalbürste weist einen vorderen Abschnitt auf, der in der Art einer kleinen Rundbürste ausgebildet ist. Die Borsten 2 sind in an sich bekannter Weise zwischen zwei gegenseitig verdrillten Abschnitten eines Drahtes 1 festgehalten. Der verdrillte Draht 1 weist ein hinteres Ende 3 auf, das von einem Uebergangsstück 4 festgehalten wird. Das Uebergangsstück 4 ist vorzugsweise aus einem weichelastischen Material (Weichplastik, Kautschuk etc.). Es hat eine kegelige Form, wobei das hintere Ende 3 in die Spitze des Kegels eingesetzt ist. In der Basis 5 des kegeligen Uebergangsstücks 4 ist eine vorzugsweise sphärische Ausnehmung 6 mit einer verengten Oeffnung 7 eingeformt. Auf der Kegelmantelfläche befindet sich eine Anzahl (z.B. ein Dutzend) Längsrippen 8.1, 8.2, von denen in der Figur zwei schematisch dargestellt sind. Sie eignen sich zur Stimulierung der Papillen durch Druckausübung.

Die Dentalbürste lässt sich auswechselbar an einer Halterung 9 befestigen. Gemäss der Erfindung sind die Befestigungsmittel im Sinn einer Druckknopfverbindung ausgebildet. Der eine Teil (Ausnehmung 6, verengte Oeffnung 7) dieser Verbindung ist bereits erläutert worden. Der andere wird durch ein vorspringendes Element 10 verkörpert. Das vorspringende Element 10 entspricht formmässig im wesentlichen dem Komplement der Ausnehmung 6 mit der verengten Oeffnung 7.

Im vorliegenden Fall ist das vorspringende Element 10 ein kugelförmiges Gebilde mit einem Hals. In verallgemeinerter Form stellt der Kopf eine Verbreiterung 11 (Querelement) und der Hals eine Einschnürung 12 (Längselement) dar. Das an der Halterung 9 vorzugsweise angeformte vorspringende Element 10 ist also pilzförmig ausgebildet.

Um die Dentalbürste an der Halterung 9 und damit am zugehörigen Griff 13 zu befestigen, muss das Uebergangsstück 4 mit der verengten Oeffnung 7 über die Verbreiterung 11 geschoben werden. Aufgrund der hinter der Verbreiterung 11 vorgesehenen Einschnürung 12 ergibt sich eine Schnappwirkung. Ausnehmung 6 und Verbreiterung 11 sind mit Vorteil so aufeinander abgestimmt, dass im zusammengefügten Zustand ein Pressitz entsteht. Die Passung kann aber auch so gewählt sein, dass bei Krafteinwirkung das Uebergangsstück 4 auf dem Kopf des vorspringenden Elements verschiebbar ist.

Infolge der sphärischen Ausbildung der Ausnehmung 6 und der Verbreiterung 7 ergibt sich zudem eine kugelgelenkartige Beweglichkeit des Verschlusses. Das Uebergangsstück 4 ist nämlich aus einem elastischen Material gefertigt. Wenn nun der Draht 1 eine Kraft quer zu seiner Längsachse erfährt, dann wird diese auf das Uebergangsstück 4 übertragen. Ein Teil dieser Kraft wird aufgrund der Konizität des Uebergangsstücks durch dieses selbst und der andere Teil aufgrund der kugelgelenkartigen Ausbildung der Elemente durch den Verschluss aufgenommen. Die Längsrippen 8.1 und 8.2 können dabei zusätzlich eine stabilisierende Wirkung entfalten. D.h. sie verstärken den konischen Teil des Uebergangsstücks 4, sodass ein grösserer Teil der auf den Draht 1 wirkenden Querkraft an den kugelgelenkartigen Druckknopfverschluss weitergeleitet wird. Der äussere Rand der Basis des kegelförmigen Uebergangsstücks bildet eine federnde Ringschulter 21. Diese stützt sich auf der Halterung, insbesondere auf der das vorspringende Element umgebenden Fläche 23, ab. Unter der Federwirkung der Ringschulter 21 wird der Draht 1 seitlich elastisch in einer Ruhelage gehalten. Beim Reinigen der Zähne in den Interdentalräumen kann daher der Draht 1 aufgrund der flexiblen Lagerung seinen Weg um die Zähne herum suchen.

Zum Entfernen der Dentalbürste genügt ein kräftiger Zug am borstentragenden Ende. Alternativ kann die Dentalbürste durch einen starken seitlichen Druck auf ihren vorderen Teil von der Halterung 9 gelöst werden.

Fig. 2 zeigt eine weitere bevorzugte Ausführungsform der Erfindung. Auch hier weist die Dentalbürste einen vorderen, borstentragenden Abschnitt (Draht 14 und Borsten 15) und ein Uebergangsstück 16 auf. Im Unterschied zur ersten Ausführungsform hat hier das Uebergangsstück 16 eine konisch konkave Mantelfläche 19. Dadurch kann die kugelgelenkartige Beweglichkeit erhöht werden. Die Federwirkung wird auch hier durch die Randbereiche der Basis 20 des konisch konkaven Uebergangsstücks 16 im Sinn einer bevorzugten Ringschulter 23 wesentlich mitbegründet.

Ein weiterer Unterschied zur ersten Ausführungsform besteht darin, dass der vorspringende Teil des zweiteiligen, druckknopfartigen Verschlusses am Uebergangsstück 16 und nicht an der Halterung angeformt ist. Das vorspringende Element ist z.B. in der Art zweier kurzer, gleichsam aufeinandergeschichteter Zylinder ausgebildet. Der erste dieser beiden Zylinder, welcher unmittelbar auf der Basis des kegelförmigen Uebergangsstücks 16 ruht, hat einen geringeren Durchmesser als der zweite daran anschliessende. Der erste Zylinder verkörpert daher die Einschnürung 17 und der zweite die Verbreiterung 18 resp. das Querelement. Zwischen der Basis 20 des Uebergangsstücks 16 und der Verbreiterung 18 ist also eine ringförmige Ausnehmung gebildet, in die ein entsprechendes Formteil einer Halterung (in der Fig. 2 nicht dargestellt) eingreifen kann.

Die schnappende Wirkung beim Zusammenfügen des Verschlusses gemäss Fig. 2 entsteht vorzugsweise dadurch, dass das Uebergangsstück 16 aus einem weichelastischen Kunststoff besteht, der sich beim Einschieben des vorspringenden Teils (Einschnürung 17, Verbreiterung 18) in eine metallische Halterung mit entsprechender Form zusammenpressen lässt. Alternativ kann natürlich auch das Uebergangsstück 16 aus einem inelastischen und die Halterung aus einem elastischen Material bestehen.

Ebensogut können beide Teile des Verschlusses aus relativ inelastischen Materialien gefertigt werden, wobei dann die Schnappwirkung durch einen zusätzlichen, federnden Mechanismus an der Halterung erzielt werden kann.

Fig. 3 zeigt eine weitere Möglichkeit, wie bei inelastischen Materialien der Schnappverschluss realisiert werden kann. In Fig. 3 ist das vordere Ende einer Halterung 23 gezeigt, das ein vorspringendes Element 24 aufweist. Letzteres ist gemäss einer bevorzugten Ausführungsform entlang seiner Längsachse geschlitzt (Schlitz 25). Typischerweise wird die Schlitzung einfach oder kreuzweise sein. Die durch die Schlitzung entstehenden (2 oder 4) "Beine" lassen sich in radialer Richtung auch dann geringfügig, aber ausreichend zusammenpressen, wenn die Halterung 23 und das vorspringende Element 24 aus einem inelastischen Material bestehen.

Auf das vorspringende Element 24 lassen sich ohne weiteres Dentalbürsten gemäss Fig. 1 aufschieben (sowohl, wenn das Uebergangsstück 4 aus einem elastischen, als auch, wenn es aus einem harten Material besteht).

Durch Kombination der einzelnen Merkmale der beschriebenen Ausführungsformen gelangt man zu weiteren vorteilhaften Vorrichtungen zur Reinigung von Zahnzwischenräumen.

Grundsätzlich können alle Ausführungsformen mit oder ohne Längsrippen ausgeführt sein. Wenn das Uebergangsstück aus einem weichelastischen Material besteht, dann ergibt sich nämlich auch ohne diese Rippen eine Stimulationswirkung während der Zahnreinigung.

Das vorspringende Element des zweiteiligen druckknopfartigen Verschlusses kann ebensogut an der Halterung als auch am Uebergangsstück angeformt sein. Welche Vorteile sich jeweils realisieren lassen, hängt z.B. von der Art der verwendeten Materialien und der Ausgestaltung der Halterung ab.

Für die Form der druckknopfartig rastend ineinander steckbaren Teile gibt es eine grosse Zahl von Variationsmöglichkeiten. In den Figuren sind nur zwei beispielhaft dargestellt. Bei dem in der Fig. 2 gezeigten Beispiel, bei dem das vorspringende Element im Querschnitt T-förmig ist, dürfte die kugelgelenkartige Beweglichkeit weitgehend fehlen.

In Fig. 1 bilden Halterung 9 und Griff 13 ein einziges in der Form nicht veränderbares Element. Ein solcher Griff lässt sich besonders günstig herstellen. Es können aber durchaus auch raffinierte Griffe mit einstellbarem Winkel verwendet werden.

Der druckknopfartige Verschluss kann zudem auch bei elektrischen Zahnbürsten oder sonstigen zahntechnischen Vorrichtungen Anwendung finden, wo die Interdentalbürste durch einen Motor gerüttelt, vibriert oder gedreht wird.

Der druckknopfartige Verschluss braucht nicht rotationssymmetrisch ausgebildet zu sein. Analog zu Fig. 2 können anstelle von zwei kurzen zylindrischen Körpern zwei quaderförmige von unterschiedlicher Grösse zur Bildung des vorspringenden Elementes dienen. Es versteht sich dabei, dass in Wirklichkeit das vorspringende Element vorzugsweise einstückig, d.h. als Anformung, und nicht durch zwei separate, zusammengefügte Teile gebildet ist.

Im folgenden soll ein Ausführungsbeispiel mit einem erfindungsgemässen Halteorgan beschrieben werden.

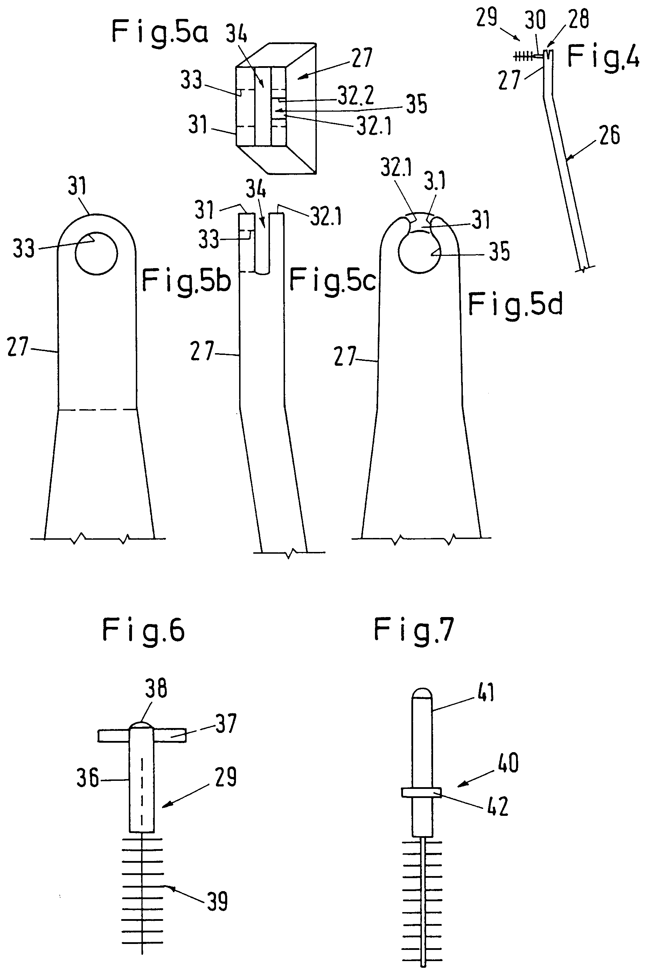

Fig. 4 zeigt einen Griff 26 mit einem abgewinkelten Ende 27, an welchem ein Halteorgan 28 ausgebildet ist. Gemäss einer besonders bevorzugten Ausführungsform sind der Griff 26, das abgewinkelte Ende 27 und das Halteorgan 28 aus einem Guss (z.B. Kunststoffspritzgussteil). Im Halteorgan 28 wird eine Interdentalbürste 29 an ihrem Befestigungsteil 30 auswechselbar gehalten. Wie weiter unten noch zu erläutern sein wird, ist der Befestigungsteil 30 vorzugsweise ebenfalls ein Formteil aus Kunststoff.

Fig. 5a-d zeigen das abgewinkelte Ende 27 mit dem Halteorgan 28 in vergrösserter Darstellung und aus verschiedenen Blickrichtungen. Der Griff 26 und das abgewinkelte Ende 27 sind typischerweise flach und im Querschnitt rechteckig. Als Halteorgan wirken ein Ringteil 31 und zwei Finger 32.1, 32.2. Der Ringteil 31 weist ein Loch 33 auf. Zwischen dem Ringteil 31 und den beiden Fingern 32.1, 32.2 ist ein Querschlitz 34 ausgebildet. Die beiden Finger 32.1, 32.2 bilden einen zangenförmigen Organteil mit Längsschlitz 35. Wie aus Fig. 5a zu erkennen ist, bilden Längs- und Querschlitz (35 resp. 34) eine T-förmige Schlitzung.

Das Loch 33 ist fluchtend mit dem Längsschlitz 35 angeordnet. Es bildet einen die T-förmige Schlitzung an einer dem Längsschlitz 35 gegenüberliegenden Seitenwand des Querschlitzes 34 untergreifenden Hohlraum.

Im Halteorgan gemäss Fig. 5a-d können unterschiedlich ausgebildete Interdentalbürsten befestigt werden.

Fig. 6 zeigt eine Interdentalbürste 29 mit Längselement 36 und Traverse 37 (Querelement). Die Traverse 37 ist in der Nähe des hinteren Endes 38 des Längselements 36 angeordnet. Das hintere Ende 38 ragt somit geringfügig über die Traverse 37 hinaus. Im Längselement 36 ist der die Borsten 39 festhaltende Draht eingegossen.

Fig. 7 zeigt eine steckbare Interdentalbürste 40. Ein Längselement 41 ist vorzugsweise in der Art eines zylindrischen Stopfens ausgebildet. Es weist eine Ringschulter 42 auf, die typischerweise in der vorderen Hälfte des Längselementes 41 an diesem angeformt ist.

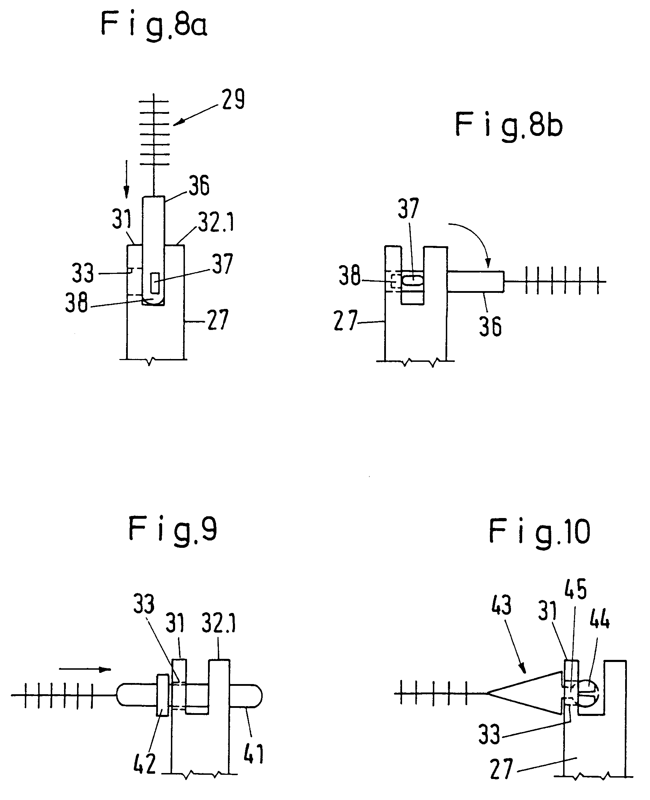

Anhand der Fig. 8a, 8b soll nun erläutert werden, wie die Interdentalbürste 29 im Halteorgan befestigt wird. Dies geschieht im Prinzip in zwei Teilschritten. Zunächst wird die Interdentalbürste 29 mit der Traverse 37 voran in Längsrichtung bzgl. des Längselementes 36 von oben in den Querschnitt 34 eingeschoben (vgl. Pfeil in Fig. 8a). Als zweites wird die Interdentalbürste 29 um 90° umgeklappt. Die Traverse 37 stellt dabei die Drehachse dar. Durch das Umklappen wird das Längselement 36 zwischen die zangenförmigen Finger 32.1, 32.2 (d.h. in den Längsschlitz 35) geschoben.

Die Traverse 37 ist gemäss einer bevorzugten Ausführungsform im Querschnitt rechteckig. Das rechteckige Profil ist dabei in Richtung der Längsachse des Längselementes 36 grösser als senkrecht dazu. Die genannte Länge ist insbesondere gerade etwa so gross, wie der Querschlitz 34 breit ist. Wie aus Fig. 8b zu erkennen ist, führt dies zu einer guten Fixierung der Interdentalbürste in der Befestigungsstellung (Traverse 37 wird zwischen dem Ringteil 31 und den beiden Fingern 32.1, 32.2 festgeklemmt).

Wie aus Fig. 8b weiter zu entnehmen ist, ragt das überstehende Ende 38 des Befestigungsteils in das Loch 33 hinein. Der Durchmesser des Längselements 36 ist auf den Innendurchmesser des Lochs 33 so abgestimmt, dass das Längselement 36 nicht nur zwischen den Fingern 32.1, 32.2, sondern auch im Ringteil 38 festsitzt.

Dadurch, dass die beiden Finger 32.1, 32.2 zangenförmig ausgebildet sind, kann das Längselement 36 in der Befestigungsstellung einrasten.

Fig. 9 zeigt, wie die steckbare Interdentalbürste 40 gemäss Fig. 7 im Halteorgan zu befestigen ist. Sie wird mit ihrem stopfenartigen Längselement 41 in das Loch 33 des Ringteils 31 eingeschoben, bis die Ringschulter 42 am Ringteil 31 anliegt. Das Längselement 41 ist so lang, dass es durch die Finger 32.1, 32.2 (im Längsschlitz 35) ebenfalls festgeklemmt wird. Die Grösse des Lochs 33 ist auf das Längselement 41 im Hinblick auf einen guten Kraftschluss abgestimmt.

Die steckbare Interdentalbürste 40 kann natürlich auch von der anderen Seite her, d.h. zunächst zwischen die beiden Finger 32.1, 32.2 und erst dann durch das Loch 33, eingeführt werden.

Im Halteorgan gemäss Fig. 5a-d kann auch eine Dentalbürste 43 befestigt werden, die über ein druckknopfartiges Verbindungselement, wie in Fig. 3 dargestellt, verfügt. Der z.B. geschlitzte, zusammenpressbare Kopf 44 wird durch das Loch 33 des Ringteils 31 gepresst und rastet darin ein. Der Hals 45 wird somit vom Ringteil 31 umfasst.

Eine Interdentalbürste mit vorspringendem Element gemäss Fig. 2 kann auch durch Einführen der Einschnürung 17 zwischen die Finger 32.1, 32.2 fixiert werden, wobei die Verbreiterung 18 in den Querschlitz 34 zu liegen kommt. Die Interdentalbürste wird somit quer zu ihrer Längsachse in den Längsschlitz 35 eingeführt. Ist die Einschnürung 17 etwas breiter als die verengte schlitzförmige Oeffnung des Längsschlitzes, kann sie unter Ueberwindung eines gewissen Widerstandes rastend in die Befestigungsstellung gebracht werden.

Das anhand der Figuren beispielhaft erläuterte Halteorgan kann in vielfältiger Weise abgewandelt werden. So kann beispielsweise der Ringteil 31 durch einen zangenförmigen Organteil (entsprechend den Fingern 32.1, 32.2) ersetzt werden. Anstelle des Ringteils 31 kann im Prinzip auch eine geschlossene Rückwand (ohne Loch 33) vorgesehen sein.

Die Ausnehmung kann auch so ausgestaltet sein, dass die Interdentalbürste mit Querelement nicht von oben, sondern von der Seite her eingeführt wird und dann nach oben geklappt werden kann.

Weist das Halteorgan eine kreuzförmige Schlitzung auf, dann kann auch die in Fig. 7 gezeigte Interdentalbürste 40 quer zu ihrer Längsachse eingeführt werden. Die Ringschulter 42 sitzt dann im Querschlitz und wirkt als Querelement zur Aufnahme axialer Zugbelastungen.

Wie sich aus dem oben Gesagten ergibt, wird bei einer bevorzugten Ausführungsform die rastende Stellung durch Ausführen einer Querbewegung (d.h. senkrecht zur Längsachse der Dentalbürste) erreicht. Es liegt natürlich auch im Rahmen der Erfindung, eine in Achsenlängsrichtung rastende Verbindung zu schaffen (vgl. Fig. 1 bis 3. Fig. 10).

Das erfindungsgemässe Halteorgan lässt sich sehr einfach herstellen. Ein Ende des Griffs wird mit einer durchgehenden Bohrung versehen, dann wird die Bohrung durch eine Querschlitzung in zwei fluchtende Bohrungen aufgeteilt, und schliesslich wird die eine dieser Bohrungen längsgeschlitzt, sodass ein zangenförmiger Organteil entsteht.

Der Befestigungsteil der Interdentalbürste ist vorzugsweise ein Kunststoffspritzgussteil. Ebenso kann der Griff mit dem Halteorgan als einteiliges Kunststoffspritzgussstück ausgebildet sein.

Die Erfindung umfasst auch ein ganzes Zahnreinigungsset mit mindestens einem Griff und mehreren, auswechselbaren Dentalbürsten. Die einzelnen Dentalbürsten unterscheiden sich z.B. in der Härte oder der Länge der Borsten. Die Borsteneigenschaften oder andere Qualitätsmerkmale sind mit Vorteil durch eine Farbcodierung auf dem Uebergangsstück kenntlich gemacht.

Zusammenfassend kann festgehalten werden, dass durch die Erfindung ein neuer und besonders einfacher Weg zur Befestigung von Interdentalbürsten an einer Halterung geschaffen worden ist.

## Patentansprüche

1. Griff mit einem Halteorgan zum auswechselbaren Befestigen einer einen Befestigungsteil (36) mit Querelement (44) aufweisenden Interdentalbürste (29) durch Einfügen des Befestigungsteils (36, 37; 17, 18) in eine Ausnehmung des Halteorgans, wobei die Interdentalbürste mit dem Befestigungsteil voran in die Ausnehmung einzufügen ist, dadurch gekennzeichnet, dass die Ausnehmung so ausgebildet ist, dass die mit dem Querelement (37, 44) voran in die Ausnehmung eingeführte Interdentalbürste durch Umklappen der Interdentalbürste (29) um eine zu Ihrer Längsachse senkrechte Achse (37) einrastbar ist.

2. Griff nach Anspruch 1, dadurch gekennzeichnet, dass die Ausnehmung zur Aufnahme eines Längselementes des Befestigungsteils einen schlitzförmigen Bereich aufweist, der durch einen zangenförmigen Organteil (32.1, 32.2, 35) gebildet ist.

3. Griff nach einem der Ansprüche 1 oder 2, dadurch gekennzeichnet, dass die Ausnehmung eine T-förmige Schlitzung (34, 35) mit Längs- und Querschlitz (35 bzw. 34) umfasst.

4. Griff nach Anspruch 3, dadurch gekennzeichnet, dass an einer Seite des Querschlitzes (34) gegenüberliegend zum Längsschlitz (35) ein die Schlitzöffnung untergreifender Hohlraum (33) ausgebildet ist.

5. Griff nach einem der Ansprüche 1 bis 4, dadurch gekennzeichnet, dass die Ausnehmung zugleich zum kraftschlüssigen Befestigen (33, 35) einer steckbaren Interdentalbürste ausgebildet ist.

6. Griff nach einem der Ansprüche 1 bis 5, dadurch gekennzeichnet, dass der als Befestigungsteil ausgebildete Bereich des Halteorgans eine Ausnehmung mit verengter Öffnung bildet.

7. Griff nach Anspruch 6, dadurch gekennzeichnet, dass er als Kunststoffspritzgussteil ausgebildet ist.

8. Zahnreinigungsset mit einem Griff nach einem der Ansprüche 1 bis 7 dadurch gekennzeichnet, dass einer Interdentalbürste vorgesehen ist, welche einen borstentragenden (2) vorderen Abschnitt und ein mit einem Befestigungsteil versehenes hinteres Ende mit Querelement zum Befestigen aufweist.

9. Zahnreinigungsset nach Anspruch 8, dadurch gekennzeichnet, dass es zusätzlich eine Interdentalbürste umfasst, deren Querelement durch eine Verbreiterung (18) neben einer Einschnürung (17) gebildet ist, so dass diese Interdentalbürste druckknopfartig in der Ausnehmung befestigt werden kann.

10. Zahnreinigungsset nach Anspruch 9, dadurch gekennzeichnet, dass der als Befestigungsmittel ausgebildete Teil eine federnde, am Halteorgan abzustützende Ringschulter aufweist.

11. Zahnreinigungsset nach einem der Ansprüche 8 bis 10, dadurch gekennzeichnet, dass zwischen einem vorderen borstentragenden Abschnitt und einem hinteren Ende ein Übergangsstück angeordnet ist, welches in der Art eines Stimulators ausgebildet ist, wobei es gegen den borstentragenden Abschnitt hin konisch zusammenläuft.

12. Zahnreinigungsset nach Anspruch 11, dadurch gekennzeichnet, dass das Übergangsstück aus einem elastischen Material besteht, kegelförmig ausgebildet ist und vorzugsweise Längsrippen aufweist.

13. Zahnreinigungsset nach Anspruch 12, dadurch gekennzeichnet, dass das Übergangsstück eine gegen die Längsachse der Interdentalbürste hin konkav engewölbte Oberfläche hat.

## Claims

1. Handle having retaining means for the interchangeable attachment of an interdental brush (29) having a fixing part (36) with cross member (44) by insertion of the fixing part (36, 37; 17, 18) in a recess in the retaining means, wherein the interdental brush is to be inserted, with its fixing part leading, into the recess, characterised in that the recess is designed so that the interdental brush introduced into the recess with its cross member (37, 44) leading is arranged to lock by turning the interdental brush (29) about an axis (37) perpendicular to its longitudinal axis.

2. Handle according to claim 1, characterised in that the recess for receiving an elongate element of the fixing part comprises a slot-shaped region which is formed by a pincer-like part (32.1, 32.2, 35).

3. Handle according to one of claims 1 and 2, characterised in that the recess comprises a T-shaped slot configuration (34, 35) having a longitudinal slot and a transverse slot (35 and 34 respectively).

4. Handle according to claim 3, characterised in that a cavity (33) undercutting the slot opening is formed on a side of the transverse slot (34) lying opposite the longitudinal slot (35).

5. Handle according to any one of claims 1 to 4, characterised in that the recess is designed also for mounting a plug-in interdental brush with an interference fit (33, 35).

6. Handle according to any one of claims 1 to 5, characterised in that the region of the retaining means constructed as the securing part forms a recess having a constricted opening.

7. Handle according to claim 6, characterised in that it is in the form of an injection-moulded plastics part.

8. Dental cleaning set having a handle according to any one of claims 1 to 7, characterised in that an interdental brush is provided, which brush comprises a bristle-bearing front portion (2) and a rear end provided with a fixing part and having a cross member for the fixing operation.

9. Dental cleaning set according to claim 8, characterised in that it additionally comprises an interdental brush, the cross member of which is formed by a widened portion (18) next to a neck (17), so that this interdental brush can be secured button-like in the recess.

10. Dental cleaning set according to claim 9, characterised in that the part in the form of fixing means comprises a resilient annular shoulder which is intended to bear against the retaining means.

11. Dental cleaning set according to any one of claims 8 to 10, characterised in that between a front bristle-bearing portion and a rear end there is arranged a transition piece which is in the form of a stimulator, the transition piece tapering conically towards the bristle-bearing portion.

12. Dental cleaning set according to claim 11, characterised in that the transition piece consists of a resilient material, is of conical construction and preferably has longitudinal ribs.

13. Dental cleaning set according to claim 12, characterised in that the surface of the transition piece is curved concavely towards the longitudinal axis of the interdental brush.

## Revendications

1. Manche avec un élément de retenue pour la fixation amovible d'une brosse interdentaire (29) comportant une partie de fixation (36) avec un élément transversal (44) par insertion de la partie de fixation (36, 37 ; 17, 18) dans un évidement de l'élément de retenue, la brosse interdentaire devant être insérée avec la partie de fixation en avant dans l'évidement, caractérisé en ce que l'évidement est conçu de telle sorte que la brosse interdentaire introduite avec l'élément transversal (37, 42) à l'avant dans l'évidement peut s'encliqueter par rabattement de la brosse interdentaire (29) autour d'un axe (37) perpendiculaire à son axe longitudinal.

2. Manche selon la revendication 1, caractérisé en ce que l'évidement pour la réception d'un élément longitudinal de la partie de fixation comporte une zone en forme de fente qui est constituée par une partie d'élément formant une pince (32.1, 32.2, 35).

3. Manche selon l'une des revendications 1 ou 2, caractérisé en ce que l'évidement englobe une fente en forme de T (34, 35) avec une fente longitudinale et transversale (35 ou 34).

4. Manche selon la revendication 3, caractérisé en ce que sur un côté de la fente transversale (34) en regard de la fente longitudinale (35) est ménagé un espace creux (33) s'engageant sous l'ouverture de fente.

5. Manche selon l'une des revendications 1 à 4, caractérisé en ce que l'évidement est également conçu pour la fixation par adhérence (33, 35) d'une brosse interdentaire enfichable.

6. Manche selon l'une des revendications 1 à 5, caractérisé en ce que la zone de l'élément de retenue formant la partie de fixation comporte un évidement avec une ouverture rétrécie.

7. Manche selon la revendication 6, caractérisé en ce qu'il est réalisé à partir d'une pièce en matière plastique coulée par injection.

8. Appareil de nettoyage dentaire comportant un manche selon l'une des revendications 1 à 7, caractérisé en ce qu'il est prévu une brosse interdentaire qui présente une section avant portant les poils de brosse (2) et une extrémité arrière munie d'une partie de fixation avec élément transversal pour la fixation.

9. Appareil de nettoyage dentaire selon la revendication 8, caractérisé en ce qu'il comprend de plus une brosse interdentaire dont l'élément transversal est constitué d'un élargissement (18) à proximité d'un amincissement ou gorge (17), de sorte que cette brosse interdentaire peut être fixée à la manière d'un bouton-pression dans l'évidement.

10. Appareil de nettoyage dentaire selon la revendication 9, caractérisé en ce que la partie conçue comme moyen de fixation présente un épaulement annulaire élastique s'appuyant sur l'élément de retenue.

11. Appareil de nettoyage dentaire selon l'une des revendications 8 à 10, caractérisé en ce qu'entre une section porteuse de poils de brosse avant et une extrémité arrière, est disposé un élément intermédiaire qui est conçu comme une sorte de stimulateur s'avançant contre la section porteuse de poils de façon conique.

12. Appareil de nettoyage dentaire selon la revendication 11, caractérisé en ce que l'élément intermédiaire est constitué par un matériau élastique de forme conique et présente de préférence des nervures longitudinales.

13. Appareil de nettoyage dentaire selon la revendication 12, caractérisé en ce que l'élément intermédiaire possède une surface concave par rapport à l'axe longitudinal de la brosse interdentaire.
